# EUROPEAN PATENT SPECIFICATION

(11) **EP 3 020 490 B1**
(45) Date of publication and mention of the grant of the patent: **16.08.2017**
(21) Application number: 15193386.8
(22) Date of filing: 06.11.2015
(51) Int. Cl.: B21C 51/00, B23D 25/04, B21F 11/00, B23K 35/40, B44B 5/00

(54) **MACHINE FOR CUTTING AND MARKING A METAL WIRE**
MASCHINE ZUM SCHNEIDEN UND MARKIEREN EINES METALLDRAHTS
MACHINE PERMETTANT DE COUPER ET DE MARQUER UN FIL MÉTALLIQUE

(30) Priority: 07.11.2014 IT VI20140288
(43) Date of publication of application: 18.05.2016
(73) Proprietor: ZT S.r.l., 36015 Schio (VI) (IT)
(72) Inventor: ZANROSSO, Fabio, 36015 Schio (VI) (IT); BEAUPAIN, Mario, 36016 Thiene (VI) (IT)
(74) Representative: Marchioro, Paolo

(56) References cited:
- GB-A- 866 615
- US-A- 2 929 136
- US-A- 4 854 147

## Description

The present invention regards a machine for cutting a metal wire into pieces, particularly adapted to obtain TIG welding rods.

As known, TIG welding rods are obtained from a metal wire reel of suitable composition, which is cut into pieces by means of a cutting machine. Each piece, suitably machined, constitutes one of the aforementioned rods.

A cutting machine of the known type comprises an advancement unit which unwinds the metal wire from the reel, straightens it, cuts it into pieces and engraves, on each piece, signs bearing information indicating the characteristics of the piece.

A knife driven with a reciprocating and intermittent motion on a cutting plane transverse to the metal wire by means of a hydraulic cylinder is used to cut the wire into pieces.

The knife is actuated when the free end of the wire, during the advancement thereof, stops against a reference surface arranged at a distance corresponding to the length of the piece to be cut with respect to the cutting plane of the knife.

After cutting the wire, the corresponding piece is conveyed towards a marking unit which, typically, comprises two pairs of dies associated to respective hydraulic cylinders for engraving signs on the two ends of the piece respectively.

The aforementioned cutting machine has a limited productivity, due to the fact that the marking unit may perform the marking on each piece only once the piece stops in the predefined marking position.

A further drawback of the cutting machines of the known type described above lies in the noise, deriving from the hydraulic power unit which actuates the marking unit and knife.

A further drawback of the aforementioned cutting machines lies in the production of anti-aesthetic signs on the pieces.

The aforementioned signs are produced by the metal wire straightening unit, which provides for a succession of rollers arranged in contact with the wire. When the end of the metal wire comes into contact with the reference surface, it stops for a period of time which, though limited, is still sufficient for the aforementioned rollers to produce the aforementioned signs by sliding on the wire surface.

Document GB 866 615, which forms the basis for the preamble of claim 1, describes a machine for cutting and marking a wire without having to stop the latter, which however, reveals the drawback of obtaining low quality marking.

The present invention aims at overcoming the aforementioned drawbacks of the cutting machines of the known type described above.

In particular, the object of the present invention is to provide a metal wire cutting machine which allows reaching a higher operating speed with respect to the speed allowed by the machines of the known type.

Another object of the present invention is to reduce the noise of the machine with respect to those of the known type.

Last but not least, an object of the invention is to avoid anti-aesthetic signs on the pieces.

The aforementioned objects are attained by a metal wire cutting machine according to the main claim.

Further detailed characteristics of the invention are outlined in the relative dependent claims.

The aforementioned objects and further advantages shall be outlined in the description of a preferred embodiment of the invention, provided solely by way of non-limiting example, with reference to the following attached drawings wherein:
- fig. 1 schematically represents a front view of the machine of the invention;
- fig. 2 represents a front view of a detail of the machine of fig. 1;
- fig. 3 represents the detail of fig. 2, in a different operative configuration;
- fig. 4 represents the detail of fig. 2, in a lateral view sectioned according to plane IV-IV;
- fig. 5 represents the detail of fig. 2, in a lateral view sectioned according to plane V-V;
- fig. 6 represents a front view of a further detail of the machine of fig. 1;
- fig. 7 represents the detail of fig. 6, in a different operative configuration.

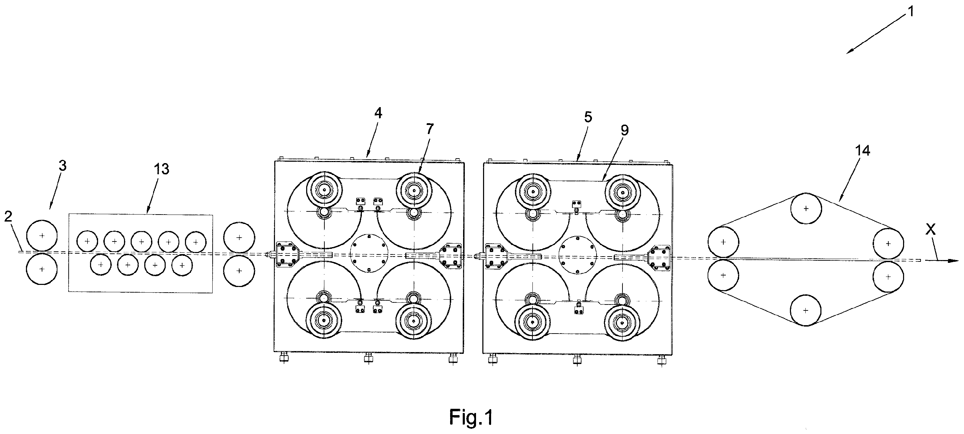

The cutting machine of the invention, indicated in its entirety in fig. 1 with reference number **1,** is particularly suitable for obtaining the TIG welding rods.

It is also clear that the invention may be applied to any metal wire cutting machine **1.**

The aforementioned machine **1** comprises an advancement unit **3** which unwinds the metal wire **2** from a reel and advances it at a predefined advancement speed along an advancement direction **X** parallel to the axis of the metal wire **2.**

Preferably, the aforementioned advancement unit **3** comprises a plurality of rollers arranged in contact with the metal wire **2** on opposite sides.

The machine **1** preferably further comprises a straightening unit **13** configured to straighten the wire **2** fed into the machine **1,** so as to eliminate the bending imparted to the wire deriving from the winding thereof into a reel.

The machine **1** further comprises a cutting unit **5** which cuts the metal wire **2** into pieces and which comprises a cutting blade **8,** associated to driving means **9** for the movement thereof and cooperating with a countering element arranged on the opposite side with respect to the wire **2.**

In addition a marking unit **4** which engraves one or more signs on the metal wire **2** is provided.

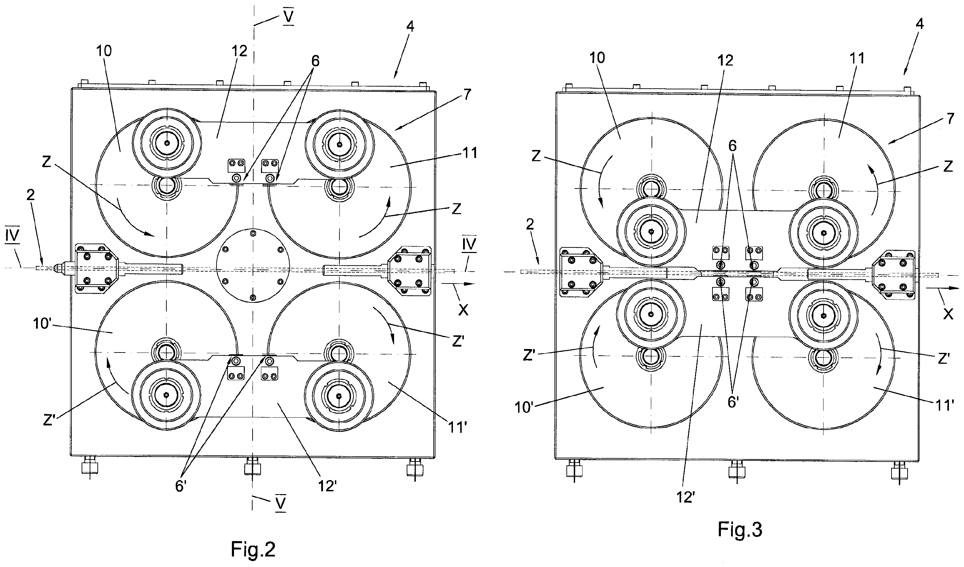

In particular and as observable in fig. 2, the aforementioned marking unit **4** comprises one or more dies **6** and a driving unit which moves each one of them so as to keep it in contact with the metal wire **2** along a corresponding predefined movement trajectory over a given time range. Each die **6** cooperates with a countering element arranged on the opposite side with respect to the wire **2.**

The driving unit **7** of the marking unit **4** is configured so that, in each point of the aforementioned movement trajectory in which each die **6** remains in contact with the wire **2,** the movement of the die **6** has a motion component directed according to the advancement direction **X.**

The aforementioned movement trajectory allows obtaining a so-called "on the fly" marking. i.e. so that each die **6** follows the metal wire **2** during the advancement of the latter over the time range in which it is in contact therewith, thus without requiring stopping the wire.

It is clear that the possibility of performing the marking of the metal wire **2** without requiring stopping the latter allows reducing the time required for such operation with respect to that required by the machines of the known type, thus allowing attaining one of the objects of the invention.

In addition, the aforementioned "on-the-fly" marking does not require stopping the wire, thus preventing the straightening head from producing unwanted signs thereon and attaining a further object of the invention.

Preferably, the driving unit **7** is configured so that, in at least one point of the movement trajectory of each die **6,** the motion component of the latter directed according to the advancement direction **X,** defines a speed equal to the advancement speed of the wire **2.**

The aforementioned configuration allows minimising the difference between the speed of the wire **2** and the die **6** according to an advancement direction **X,** to the advantage of the marking accuracy.

Even more preferably, in the remaining points of the advancement trajectory, the aforementioned motion component defines a speed which does not considerably differ from the advancement speed of the wire **2.**

Even more preferably, the overall extension of the movement trajectory in the direction perpendicular to the advancement direction **X** is substantially negligible with respect to the overall extension thereof according to the aforementioned advancement direction **X.**

In other words, the movement of each die **6** in the advancement direction **X** is considerably greater than the one that produces the compression of the wire **2** and, thus, the actual marking, with the advantage of increasing the marking time and the efficiency thereof.

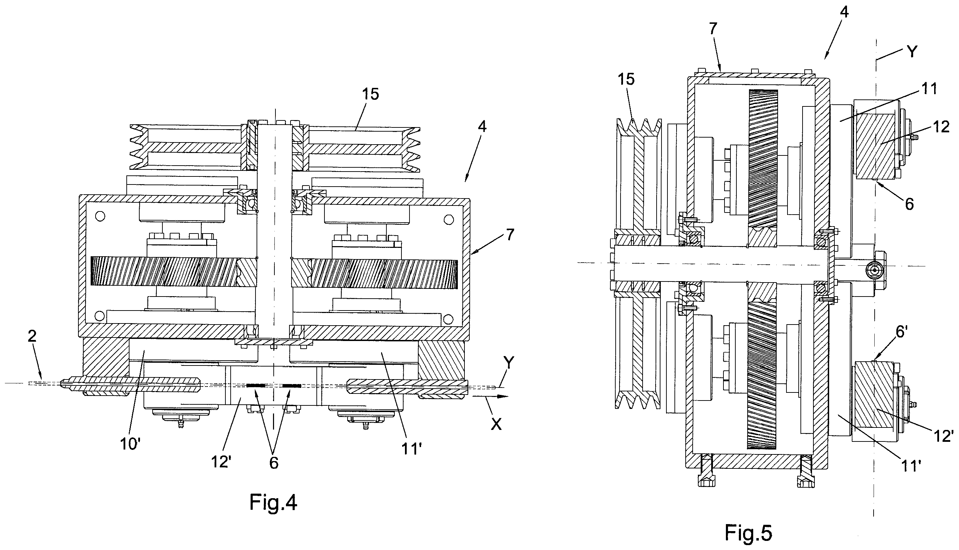

In order to obtain the aforementioned effects, the driving unit **7** comprises, as observable in fig. 2, a first crank **10** associated to a motor for the rotation according to a direction **Z** on a rotation plane **Y** parallel to the advancement direction **X** and indicated in fig. 4. Each die **6** is operatively associated to the aforementioned first crank **10** so as to receive the rotational motion thereof. Advantageously, the use of the crank **10** allows moving each die **6** with a more regular motion with respect to what can be obtained with a hydraulic cylinder and, thus, it allows attaining higher advancement speed for the wire **2** and thus higher productivity of the machine **1.**

Even more advantageously, the crank **10** may be actuated by an electric motor instead of the hydraulic one, thus allowing attaining the object of reducing the noise of the machine **1.**

Preferably, the crank **10** is continuously rotated so as to perform a complete rotation for each marking.

Advantageously, the continuous rotation of the crank **10** further facilitates the regularity of operation of the marking unit **4.**

Each die **6** belongs to a connecting rod **12** which has a first rotatable end associated to the first crank **10** and a second opposite end rotatably associated to a support element.

This allows limiting the inclination of each die **6** with respect to the metal wire **2** during the entire motion of the connecting rod **12,** to the advantage of the marking quality.

The aforementioned support element is a second crank **11** rotatable on the same rotation plane **Y** of the first crank **10** or on a plane parallel thereto, to which the second end of the connecting rod **12** is rotatably associated.

Preferably, the arms of the two cranks **10** and **11** have the same length and they are kept constantly parallel, so that the orientation of the connecting rod **12** and, thus, of each die **6** remains unvaried during the movement, facilitating the marking quality.

The aforementioned condition of parallelism is preferably obtained by mechanically connecting the two cranks **10** and **11** to the same motor.

Preferably, the mechanical connection between the two cranks **10** and **11** comprises a series of toothed wheels of the type visible in fig. 4, associated to a pulley **15** actuated by the aforementioned motor, or a kinematic mechanism of any known type.

As regards the number of dies **6,** preferably the marking unit **4** comprises two of them, arranged in succession according to an advancement direction **X** and adapted to respectively mark two consecutive pieces at the mutually adjacent respective ends.

Preferably, the aforementioned two dies **6** both belong to the connecting rod **12** of the marking unit **4.**

Advantageously, this allows using a single connecting rod **12** for both markings.

According to a variant embodiment, not represented in the drawings, the second of the aforementioned dies **6** belongs to a second marking unit **4** entirely similar to the previously described one and arranged in series on the latter according to the advancement direction **X** of the wire.

Advantageously, the aforementioned arrangement allows reducing the pressure force required by each marking unit **4,** thus allowing reducing the power of the relative motor.

Preferably, in both the aforementioned embodiments the countering element of each die **6** is a corresponding counter-die **6'** entirely similar to the die **6** and actuated specularly to the latter with respect to the metal wire **2.**

Figs. 2 and 3 represent the marking unit **4** with the dies **6** and the counter-dies **6'** in a mutual maximum distance position and a mutual minimum distance position, respectively.

Evidently, the latter position is the one corresponding to the maximum compression of the wire **2** during the marking.

Advantageously, the aforementioned configuration allows obtaining the substantial nullification of the overall thrust exerted on the metal wire **2** by each of the aforementioned mutually faced pairs of dies **6, 6'** thus avoiding unwanted deformation of the wire and facilitating the regularity of the marking process.

Preferably, the aforementioned condition is obtained by moving each counter-die **6'** through the cranks **10', 11'** and a connecting rod **12'** entirely similar to those described above and specular with respect thereto. In particular, the cranks **10'** and **11'** are rotated according to a second direction **Z'** opposite to the direction **Z** of the cranks **10** and **11.**

Preferably and as observable in fig. 5, the cranks **10'** and **11'** are mechanically connected to the cranks **10** and **11** through toothed wheels, which allow using a single motor for the synchronous rotation of all cranks as described above. According to a variant embodiment of the invention not represented in the drawings, the driving unit **7** comprises further cranks, symmetric to the aforementioned cranks **10, 11, 10', 11'** with respect to the movement plane of the connecting rods **12** and **12'.**

Advantageously, the further cranks described above increase the stability of the connecting rods **12** and **12'.**

Evidently, in variant embodiments of the invention, the driving unit **7** may be different from the one described above as long as it allows performing the "on-the-flight" marking.

Preferably, the machine **1** also comprises a sensor which detects the instantaneous advancement speed of the metal wire **2** and which sends a signal representing such instantaneous speed to a control unit configured to actuate the driving unit **7** of the marking unit **4** according to such signal. Advantageously, the previously described sensor and control unit allow adapting the speed of each die **6, 6'** to the advancement speed of the wire **2.** Preferably, but not necessarily, the aforementioned sensor comprises a roller arranged in contact with the metal wire **2** upstream of the cutting unit **5.**

As regards the cutting unit **5,** the respective driving means **9** are preferably configured so that the cutting blade **8** is moved similarly to the dies **6** and **6'** obtaining the same advantages outlined previously.

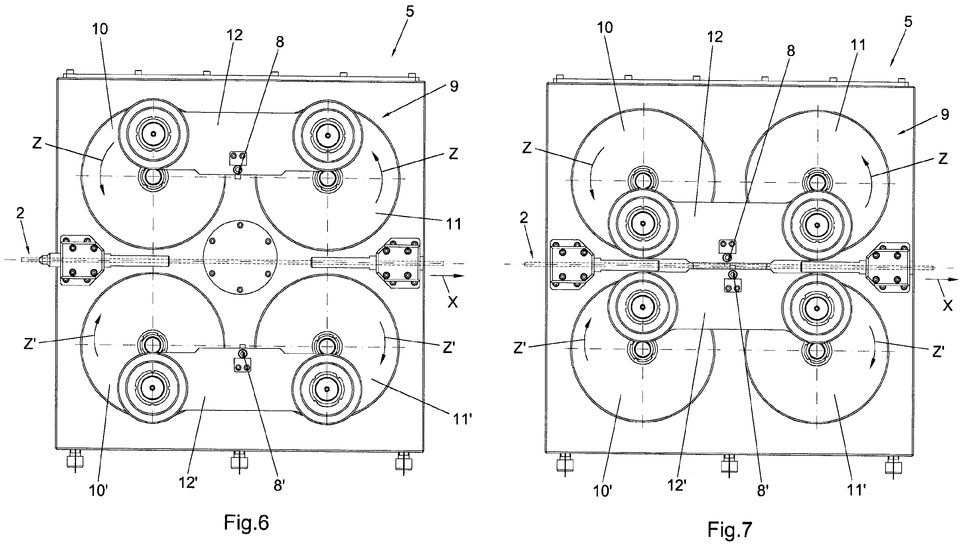

Preferably and as observable in figs. 6 and 7, the driving means **9** of the cutting unit **5** are similar to the driving unit **7** of the marking unit **4.** In figs. 6 and 7, the same reference numbers used in figs. 2 and 3 are used to indicate the components of the cutting unit **5** functionally corresponding to those of the marking unit **4.**

In particular, the cutting unit **5** configured as described above allows an "on-the-flight" cutting, thus avoiding any stopping of the metal wire **2,** to the advantage of the regularity of operation of the machine **1** and greater obtainable machining speed.

According to a variant embodiment of the invention not represented in the drawings, the driving means **9** of the cutting unit **5** coincide with the driving unit **7** of one of the aforementioned marking units **4.**

This, advantageously, allows obtaining the cutting simultaneously with the marking, thus reducing the complexity of the machine **1.**

In this variant, the cutting blade **8** preferably belongs to the connecting rod **12** of the aforementioned driving unit **7.**

In addition, the cutting blade **8** is preferably arranged between the aforementioned two dies **6,** so that the two respective markings are respectively positioned on the cut piece of wire **2** and on the remaining wire section **2,** as described previously.

If the machine **1** comprises two distinct marking units **4,** the cutting blade **8** preferably belongs to the marking unit **4** arranged further downstream according to the advancement direction **X** of the wire.

This allows performing the cutting at the end of the marking process, so as to avoid premature cutting of the wire thus jeopardising the subsequent marking. In any case, the countering element of the cutting blade **8** is preferably a cutting counter-blade **8'** entirely similar to the cutting blade **8** and actuated specularly to the latter.

In particular, if the cutting blade **8** belongs to the connecting rod **12,** the counter-blade **8'** belongs to the connecting rod **12'.** The previously outlined considerations regarding the cutting blade **8** may also be extended to the counter-blade **8'** by similarity.

Preferably, the counter-blade **8'** is arranged so as to be adjacent to the cutting blade **8** during the cutting operation, as observable from fig. 7.

Preferably, the machine **1** also comprises a unit **14** for extracting the cut piece, arranged downstream of the cutting unit **5.**

Preferably, the aforementioned extraction unit **14** comprises a pair of conveyor belts faced and opposite with respect to the metal wire **2.**

In the light of the above, it is clear that the machine described above attains all preset objects.

In particular, the use of the "on-the-flight" marking allows the machine of the invention to reach an operating speed higher than the speed allowed by the machines of the known type.

In addition, the possibility of using electric motors instead of hydraulic motors for moving the marking unit allows reducing the noise of the machine with respect to those of the known type.

In addition, the possibility of avoiding the stopping of the metal wire during the machining avoids the occurrence of anti-aesthetic signs on the pieces.

## Claims

1. Machine (1) for cutting and marking a metal wire (2) comprising:
- an advancement unit (3) for moving said metal wire (2) at a predefined advancement speed according to an advancement direction (X) parallel to the axis of said metal wire (2);
- a marking unit (4) for engraving one or more signs on said metal wire (2), comprising at least one die (6, 6') associated to a driving unit (7);
- a cutting unit (5) for cutting said metal wire (2) into pieces, comprising a cutting blade (8, 8') associated to driving means (9);
said driving unit (7) being configured to define for said die (6, 6') a movement trajectory in contact with said metal wire (2) and having, in each point, a motion component directed according to said advancement direction (X), said driving unit (7) comprising a first crank (10, 10') associated to a motor for rotation on a rotation plane (Y) parallel to said advancement direction (X);
said die (6, 6') being operatively associated to said first crank (10, 10') and belonging to a connecting rod (12, 12') which has a first end rotatably associated to said first crank (10, 10') and a second opposite end rotatably associated to a support element;
**characterised in that** said support element is a second crank (11, 11') rotatable on a corresponding rotation plane (Y) parallel to said rotation plane (Y) of said first crank (10, 10'), said second end of said connecting rod (12, 12') being rotatably associated to said second crank (11,11') so that said die (6, 6') maintains the orientation thereof unvaried during the movement along the entire movement trajectory.

2. Machine (1) according to claim 1, **characterised in that** said driving unit (7) is configured so that said motion component defines for said die (6, 6') a speed equal to said advancement speed in at least one point of said movement trajectory.

3. Machine (1) according to any one of the preceding claims, **characterised in that** said marking unit (4) comprises two of said dies (6, 6'), mutually faced on corresponding opposite sides with respect to said metal wire (2).

4. Machine (1) according to any one of the preceding claims, **characterised in that** it comprises a sensor for detecting said advancement speed of said metal wire (2) and a control unit configured to actuate said driving unit (7) according to the advancement speed detected by said sensor.

5. Machine (1) according to claim 4, **characterised in that** said sensor comprises a roller adapted to be arranged in contact with said metal wire (2) upstream of said cutting unit (5).

6. Machine (1) according to claim 1, **characterised in that** said cutting blade (8, 8') belongs to said connecting rod (12, 12') of said driving unit (7).

7. Machine (1) according to claim 6, **characterised in that** it comprises two of said marking units (4), arranged in series according to said advancement direction (X), said cutting blade (8, 8') belonging to the marking unit (4) arranged further downstream according to said advancement direction (X).

## Patentansprüche

1. Maschine (1) zum Schneiden und Markieren eines Metalldrahts (2), Folgendes umfassend:
- eine Vorschubeinheit (3) zum Bewegen des besagten Metalldrahts (2) mit einer vorbestimmten Vorlaufgeschwindigkeit gemäß einer Vorlaufrichtung (X), die parallel zur Achse des besagten Metalldrahts (2) verläuft;
- eine Markiereinheit (4) zum Einprägen eines oder mehrerer Zeichen in den besagten Metalldraht (2), wenigstens einen mit einer Antriebseinheit (7) verbundenen Prägestempel (6, 6') umfassend;
- eine Schneideeinheit (5) zum Schneiden des besagten Metalldrahts (2) in Stücke, ein mit Antriebsmitteln (9) verbundenes Schneidmesser (8, 8') umfassend;
wobei die besagte Antriebseinheit (7) so definiert ist, dass sie für den besagten Prägestempel (6, 6') eine Bewegungstrajektorie definiert, die in Kontakt mit dem besagten Metalldraht (2) steht und an jedem Punkt eine gemäß der besagten Vorlaufrichtung (X) ausgerichtete Bewegungskomponente aufweist, und wobei die besagte Antriebseinheit (7) eine erste Kurbel (10, 10') umfasst, die mit einem Motor für die Drehung auf einer parallel zu der besagten Vorlaufrichtung (X) stehenden Drehebene (Y) verbunden ist;
wobei der besagte Prägestempel (6, 6') operativ mit der besagten ersten Kurbel (10, 10') verbunden ist und zu einer Verbindungsstange (12, 12') gehört, deren erstes Ende drehbar mit der besagten ersten Kurbel (10, 10') verbunden ist und deren zweites, entgegengesetztes Ende drehbar mit einem Halteelement verbunden ist;
**dadurch gekennzeichnet, dass** das besagte Halteelement eine zweite Kurbel (11, 11') ist, drehbar auf einer entsprechenden Drehebene (Y), die parallel zu der besagten Drehebene (Y) der besagten ersten Kurbel (10, 10') steht, wobei das besagte zweite Ende der besagten Verbindungsstange (12, 12') drehbar mit der besagten zweiten Kurbel (11, 11') verbunden ist, sodass der besagte Prägestempel (6, 6') seine Ausrichtung während der Bewegung entlang der gesamten Bewegungstrajektorie unverändert beibehält.

2. Maschine (1) gemäß Patentanspruch 1, **dadurch gekennzeichnet, dass** die besagte Antriebseinheit (7) so konfiguriert ist, dass die besagte Bewegungskomponente für den besagten Prägestempel (6, 6') eine Geschwindigkeit definiert, die in wenigstens einem Punkt der besagten Bewegungstrajektorie der besagten Vorlaufgeschwindigkeit entspricht.

3. Maschine (1) gemäß eines jeden der vorstehenden Patentansprüche, **dadurch gekennzeichnet, dass** die besagte Markiereinheit (4) zwei der besagten Prägestempel (6, 6') umfasst, die an entsprechenden, einander bezüglich des besagten Metalldrahts (2) entgegengesetzten Seiten einander wechselseitig gegenüberliegen.

4. Maschine (1) gemäß eines jeden der vorstehenden Patentansprüche, **dadurch gekennzeichnet, dass** sie einen Sensor zur Erfassung der besagten Vorlaufgeschwindigkeit des besagten Metalldrahts (2) und eine Steuereinheit umfasst, die so konfiguriert ist, dass sie die besagte Antriebseinheit (7) gemäß der durch den besagten Sensor erfassten Vorlaufgeschwindigkeit betätigt.

5. Maschine (1) gemäß Patentanspruch 4, **dadurch gekennzeichnet, dass** der besagte Sensor eine Walze umfasst, die geeignet ist, in Kontakt mit dem besagten Metalldraht (2) stromaufwärts der besagten Schneideeinheit (5) positioniert zu werden.

6. Maschine (1) gemäß Patentanspruch 1, **dadurch gekennzeichnet, dass** das besagte Schneidmesser (8, 8') zu der besagten Verbindungsstange (12, 12') der besagten Antriebseinheit (7) gehört.

7. Maschine (1) gemäß Patentanspruch 6, **dadurch gekennzeichnet, dass** sie zwei der besagten, gemäß der besagten Vorlaufrichtung (X) in Reihe angeordneten Markiereinheiten (4) umfasst, wobei das besagte, zu der Markiereinheit (4) gehörende Schneidmesser (8, 8') entlang der besagten Vorlaufrichtung (X) weiter stromabwärts angeordnet ist.

## Revendications

1. Machine (1) pour la coupe et le marquage d'un fil métallique (2) comprenant:
- un groupe d'avance (3) pour déplacer ledit fil métallique (2) à une vitesse d'avance prédéfinie selon une direction d'avance (X) parallèle à l'axe dudit fil métallique (2);
- un groupe de marquage (4) pour graver un ou plusieurs signes sur ledit fil métallique (2), comprenant au moins une matrice (6, 6') associée à une unité de motorisation (7);
- un groupe de coupe (5) pour couper ledit fil métallique (2) en morceaux, comprenant une lame de coupe (8, 8') associée à des moyens de motorisation (9);
ladite unité de motorisation (7) étant configurée pour définir pour ladite matrice (6, 6') une trajectoire de déplacement en contact avec ledit fil métallique (2) et présentant, dans chaque point, une composante de mouvement orientée selon ladite direction d'avance (X), ladite unité de motorisation (7) comprenant une première manivelle (10, 10') associée à un moteur pour la rotation sur un plan de rotation (Y) parallèle à ladite direction d'avance (X);
ladite matrice (6, 6') étant associée de manière opérationnelle à ladite première manivelle (10, 10') et appartenant à une bielle (12, 12') qui présente une première extrémité associée de manière pivotante à ladite première manivelle (10, 10') et une deuxième extrémité opposée associée de manière pivotante à un élément de support;
**caractérisée en ce que** ledit élément de support est une deuxième manivelle (11, 11') pivotante sur un plan de rotation correspondant (Y) parallèle audit plan de rotation (Y) de ladite première manivelle (10, 10'), ladite deuxième extrémité de ladite bielle (12, 12') étant associée de manière pivotante à ladite deuxième manivelle (11, 11') de façon à ce que ladite matrice (6, 6') maintient son orientation inchangée durant le déplacement le long de toute la trajectoire de déplacement.

2. Machine (1) selon la revendication 1, **caractérisée en ce que** ladite unité de motorisation (7) est configurée de manière à ce que ladite composante de mouvement définit pour ladite matrice (6, 6') une vitesse égale à ladite vitesse d'avance dans au moins un point de ladite trajectoire de déplacement.

3. Machine (1) selon l'une quelconque des revendications précédentes, **caractérisée en ce que** ledit groupe de marquage (4) comprend deux desdites matrices (6, 6'), tournées réciproquement l'une en face de l'autre sur des côtés opposés correspondants par rapport audit fil métallique (2).

4. Machine (1) selon l'une quelconque des revendications précédentes, **caractérisée en ce qu'**elle comprend un capteur pour détecter ladite vitesse d'avance dudit fil métallique (2) et une unité de contrôle configurée pour actionner ladite unité de motorisation (7) selon la vitesse d'avance détectée par ledit capteur.

5. Machine (1) selon la revendication 4, **caractérisée en ce que** ledit capteur comprend un rouleau apte à être mis en contact avec ledit fil métallique (2) en amont dudit groupe de coupe (5).

6. Machine (1) selon la revendication 1, **caractérisée en ce que** ladite lame de coupe (8, 8') appartient à ladite bielle (12, 12') de ladite unité de motorisation (7).

7. Machine (1) selon la revendication 6, **caractérisée en ce qu'**elle comprend deux desdits groupes de marquage (4), disposés en série selon ladite direction d'avance (X), ladite lame de coupe (8, 8') appartenant au groupe de marquage (4) disposé plus en aval selon ladite direction d'avance (X).
